# EUROPEAN PATENT APPLICATION

(11) **EP 1 084 748 A2**
(43) Date of publication of application: **21.03.2001**
(21) Application number: 00120319.9
(22) Date of filing: 15.09.2000
(51) Int. Cl.: B01J 20/28, B01J 20/26

(54) **Membrane-shaped biopolymer adsorbing material and biopolymer adsorbing kit**

(30) Priority: 17.09.1999 JP 26292299
(71) Applicant: Fuji Photo Film Co., Ltd., Kanagawa-ken (JP)
(72) Inventor: Ogawa, Masashi, c/o Fuji Photo Film Co., Ltd., Ashigarakami-gun, Kanagawa-ken (JP)
(74) Representative: Klunker . Schmitt-Nilson . Hirsch

(57) **Abstract**

Disclosed herein is a membrane-shaped biopolymer adsorbing material. The adsorbing material includes both an adsorbing portion for adsorbing a biopolymer contacted, and a supporting portion, which has higher rigidity than the adsorbing portion, for supporting the adsorbing portion.

## Description

### BACKGROUND OF THE INVENTION

### Field of the Invention

The present invention relates to a membrane-shaped biopolymer adsorbing material and a kit for constructing the adsorbing material.

### Description of the Related Art

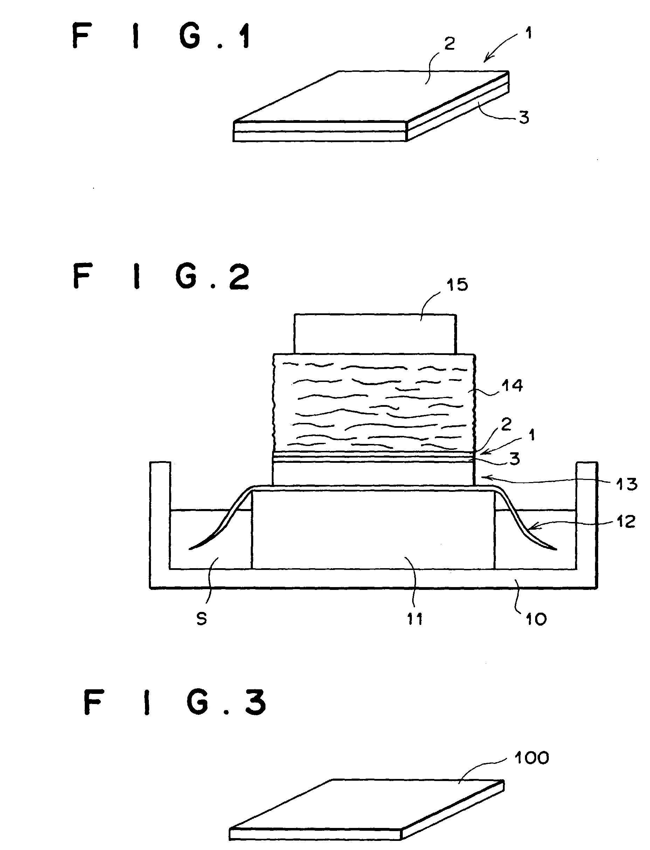

In the sequence determination for deoxyribonucleic acid (DNA), gene expression level analysis, etc., a wide variety of membranes are often used which have the ability to adsorb a biopolymer such as a polynucleotide, protein, and the like (hereinafter also referred to as " biopolymer adsorbing power"). For example, any organism-originated polynucleotide (such as genome DNA, complementary DNA (cDNA), messenger ribonucleic acid (mRNA), etc.), synthetic oligonucleotide, or protein (such as antigenic peptide, an antibody, etc.) is adsorbed and fixed on a nitrocellulose membrane 100 shown in Fig. 3. Then, hybridization and the other genetic engineering operations, and immuochemical operations are performed on the nitrocellulose membrane 100.

Incidentally, in the event that a membrane of predetermined size having a very large number of polynucleotide samples dotted thereon (macro array), or a membrane having a gel-electrophoresed polynucleotide or protein sample transferred from the gel (Southern blotting, Western blotting, etc.), is employed in hybridization or autoradiography, the operator must pay greater attention to handling of such a biopolymer adsorbing membrane because the membrane has the following disadvantages: generally the membrane, which consists of nitrocellulose, etc., is low in rigidity and is therefore liable to be damaged; and it is prone to produce creases or wrinkles which will constitute a hindrance for the handling operation.

### SUMMARY OF THE INVENTION

The present invention has been made in order to overcome difficulties in the operation of handling the conventional biopolymer adsorbing membrane. Accordingly, it is the primary object of the present invention to provide a membrane-shaped material that is less likely to be damaged and produce wrinkles, while having the same biopolymer adsorbing power as the conventional membrane-shaped material.

To achieve this end, there is provided a membrane-shaped biopolymer adsorbing material which comprises an adsorbing portion for adsorbing a biopolymer contacted, and a supporting portion, which has higher rigidity than the adsorbing portion, for supporting the adsorbing portion.

The word "biopolymer" used herein refers to polyelectrolytes that constitute a living organism. Typically, it indicates a polynucleotide and protein. However, the biopolymer used herein also includes an oligonucleotide and an oligopeptide, chemically synthesized.

The membrane-shaped biopolymer adsorbing material of the present invention, as with the conventional membrane having the aforementioned biopolymer adsorbing power, adsorbs the biopolymers contained in various samples at the aforementioned adsorbing portion. In addition, the rigidity of the adsorbing portion is reinforced by the aforementioned supporting portion. Because of this, the membrane-shaped biopolymer adsorbing material of the present invention is hard to damage and suppresses the occurrence of creases and wrinkles. Therefore, it can be handled more easily than the conventional membrane. As a result, the operation of hybridization, autoradiography, etc., can be more easily and efficiently performed.

In a preferred form of the present invention, the membrane-shaped biopolymer adsorbing material has a double-layer structure consisting of the adsorbing portion and the supporting portion. In such a double-layer structure, reinforcement of rigidity can be uniformly applied all over the adsorbing portion, and particularly, operability is good because of simplicity in structure.

In another preferred form of the present invention, the adsorbing portion and the supporting portion are each constructed of a porous body having water permeability. If the adsorbing portion and the supporting portion are a porous body with water permeability, they are both permeable to water and therefore the operation of adsorbing a biopolymer from a solution to the adsorbing portion can be efficiently performed.

The aforementioned object of the present invention is also achieved by providing a biopolymer adsorbing kit which comprises an adsorbing membrane for adsorbing a biopolymer contacted, and a supporting membrane, which is superposed on the adsorbing membrane and has higher rigidity than the adsorbing membrane, for supporting the adsorbing membrane.

According to the biopolymer adsorbing kit of the present invention, a membrane-shaped biopolymer adsorbing material can be constructed and used in which the occurrence of creases and wrinkles is suppressed and also the operation of hybridization, autoradiography, etc., can be more easily performed. In addition, according to the biopolymer adsorbing kit wherein the adsorbing membrane and the supporting membrane are each constructed of a porous body having water permeability, a membrane-shaped biopolymer adsorbing material can be constructed and used in which the water permeability is excellent and also the operation of adsorbing a biopolymer from a solution to the adsorbing membrane can be efficiently performed.

### BRIEF DESCRIPTION OF THE DRAWINGS

The present invention will be described in further detail with reference to the accompanying drawings wherein:
FIG. 1 is a perspective view showing a membrane-shaped biopolymer adsorbing material constructed according to an embodiment of the present invention;
FIG. 2 is a vertical sectional view showing how the membrane-shaped biopolymer adsorbing material is employed; and
FIG. 3 is a perspective view showing a conventional membrane-shaped biopolymer adsorbing material.

### DESCRIPTION OF THE PREFERRED EMBODIMENTS

A membrane-shaped biopolymer adsorbing material according to the present invention is typically a membrane-shaped polynucleotide adsorbing material and/or an adsorbing material that can be used as the membrane-shaped polynucleotide adsorbing material.

In the membrane-shaped biopolymer adsorbing material of the present invention, the adsorbing portion is constructed with a membrane-shaped body that can adsorb the biopolymer, while the supporting portion is constructed with a membrane-shaped material higher in rigidity than the constituent material of the adsorbing portion. The membrane-shaped biopolymer adsorbing material is not limited to specific materials. It is preferable that such constituent materials be polymeric materials formed in the form of a thin membrane. Typically, as the adsorbing-portion constituent material (hereinafter referred to simply as an "adsorbing membrane"), nitrocellulose, nylon, positive charge introduced nylon, DEAE-cellulose, polyvinylidenefluoride (PVDF), etc, are preferred. Nitrocellulose is particularly preferred because it is excellent in ability to adsorb a polynucleotide or protein. In addition, a porous body with fine bores whose average pore diameter is between 0.2 µm and 2.0 µm, for example, a nitrocellulose or nylon membrane commonly used in biochemical research applications, is particularly preferable as the adsorbing membrane of this embodiment. The thickness of the adsorbing membrane varies depending on the material thereof and is not particularly limited. However, considering easy adhesion with the supporting-portion constituent material to be described later, etc., it is desirable that the adsorbing membrane range from about 1 to 200 µm in thickness and further desirable that it range from about 5 to 100 µm.

On the other hand, the function of the supporting portion in the membrane-shaped biopolymer adsorbing material of the present invention is to enhance the rigidity of the adsorbing portion to facilitate handling of the membrane-shaped biopolymer adsorbing material. Because of this, a membrane-shaped polymeric material, relatively higher in rigidity than the above-mentioned polymeric materials, is usable as the supporting portion. As the supporting-portion constituent material (hereinafter referred to as simply a "supporting membrane"), cellulose, cellulose acetate, regenerated cellulose, polyethylene, polypropylene, polyvinyl chloride (PVC), polytetrafluoroethylene (PTFE), polycarbonate (PC), polyethylene terephthalate (PET), etc., are preferred. PC and PET are particularly preferable as the supporting membrane because they are high in rigidity and low in ability to adsorb protein and a polynucleotide. To assure water permeability, a porous body with fine bores whose average pore diameter is between 0.2 µm and 2.0 µm, preferably between 0.4 µm and 1.0 µm, for example, porous polycarbonate or polyester is particularly preferable as the adsorbing membrane. A porous membrane-shaped biopolymer adsorbing material, which is constructed of the aforementioned porous supporting membrane and the aforementioned porous adsorbing membrane, is excellent in water permeability and can be suitably used in a multiplicity of blotting operations. The thickness of the supporting membrane varies depending on the material thereof and is not particularly limited. However, to effectively enhance the rigidity of the above-mentioned adsorbing portion, it is preferable that the supporting membrane range from about 5 to 1000 µm in thickness and further preferable that it range from about 10 to 200 µm.

Note that the above-mentioned adsorbing portion and supporting portion, which constitute the membrane-shaped biopolymer adsorbing material of the present invention, can be formed from the above-mentioned resin materials by a general membrane molding method. For instance, even by properly cutting a nitrocellulose membrane and a PC membrane which are commercially available, an adsorbing membrane and a supporting membrane, suitable for carrying out the present invention, are obtainable.

Now, a description will be given of the appropriate configuration of the above-mentioned supporting portion and adsorbing portion. It is preferable that the membrane-shaped biopolymer adsorbing material of the present invention have a configuration that can replace a normal biopolymer adsorbing membrane consisting of nitrocellulose, etc., without newly adding special operations to the above-mentioned hybridization and the other gene engineering operations, and immuochemical operations. From such a viewpoint, a membrane-shaped biopolymer adsorbing material 1 with a double-layer structure, constructed of a porous adsorbing portion 3 (typically nitrocellulose) and a porous supporting portion 2 (typically porous PC) disposed in intimate contact with one surface of the adsorbing portion 3, such as that shown in Fig. 1, is preferred. The membrane-shaped biopolymer adsorbing material 1 with a double-layer structure can be suitably used in a macro array or a multitude of blotting operations, as with the conventional biopolymer adsorbing membranes. In addition, with the supporting portion 2 whose rigidity is high, the strength of the adsorbing portion 3 corresponding to the surface layer portion can be uniformly enhanced.

Besides the above-mentioned double-layer structure, for example, a three-layer structure in the form interposing a membrane-shaped supporting portion between adsorbing portions (i.e., a structure with the adsorbing portions 3 disposed on both surfaces of the supporting portion 2 of Fig. 1) is also preferred as the membrane-shaped biopolymer adsorbing material of the present invention. For the membrane-shaped biopolymer adsorbing material of the present invention in the form of such three layers, the adsorbing portions on both surfaces can be utilized in a macro array, etc. In addition, the configuration of the supporting portion is sufficient if it is capable of enhancing the rigidity of the adsorbing portion. For example, in Fig. 1, the supporting portion may have configuration stacked in frame form only on the circumferential edge portion of the membrane constituting the adsorbing portion 3.

Thus, the membrane-shaped biopolymer adsorbing material of the present invention is less liable to be damaged even when handled carelessly, and less likely to produce creases or wrinkles, unlike the conventional mere nitrocellulose membrane, etc. Because of this, the membrane-shaped biopolymer adsorbing material of the present invention does not require greater care and attention, required in the case of the conventional mere nitrocellulose membrane, etc. Therefore, according to the membrane-shaped biopolymer adsorbing material of the present invention (typically the adsorbing material 1 with double-layer structure shown in Fig. 1), the operator can be released from strain or stress, which might result from the handling of a biopolymer adsorbing membrane whose rigidity is low, during hybridization or autoradiography operation.

Now, the preparation of the membrane-shaped biopolymer adsorbing material of the present invention will be described. In the membrane-shaped biopolymer adsorbing material, various methods of adhesion are applicable, as long as the adsorbing portion and the supporting member adhere to each other so that the rigidity of the adsorbing portion is enhanced.

The adhesives are not particularly limited because they vary depending on a combination of the materials of the adsorbing and supporting portions. In general, a resin adhesive is applicable to adhesion between the absorbing membrane and the supporting membrane. Although not particularly limited, an acrylic adhesive, an urethane adhesive, etc., are preferred. As a gluing agent, an acrylic aqueous emulsion type can be suitably used to glue the supporting membrane and the adsorbing membrane. In addition, depending on the polymeric material to be used, adoption of fusion means is also preferable. For instance, a sealant with a low melting point may fill the space between the supporting portion (supporting membrane) and the adsorbing portion (adsorbing membrane) and be melted at the melting point where these two membranes are not melted. In the case where a supporting membrane and an adsorbing member, which consist of a porous material, adhere to each other, it is preferable to use an adhesive, etc., in part from the viewpoint of maintaining water permeability. For example, in the event of the membrane-shaped biopolymer adsorbing material 1 with a double-layer structure shown in Fig. 1, an adhesive may be used only in the circumferential edge portions of the adsorbing portion 3 and the supporting portion 2.

In addition, it is considered that only the adsorbing portion is desired to be stored, after the membrane-shaped biopolymer adsorbing material has been employed in hybridization, enzyme immunoassay (EIA) and the other antigen-antibody reactions, or autoradiography. In such a case, it is preferred to adhere the adsorbing portion and the supporting portion by separation means by which the adsorbing portion can be separated from the supporting portion afterward. This is realized by using an adhesive partially in the adsorbing and supporting portions, as described above, or by a means for temporarily adhering an adsorbing membrane (e.g., nitrocellulose or nylon membrane) and a supporting membrane (e.g., PC or PET membrane) with intermolecular force or static electricity. For example, such a means of adhesion can be adopted between an adsorbing membrane positively charged and a supporting membrane negatively charged. Since this adhesion means uses no adhesive, the adsorbing membrane and the supporting membrane can be readily separated at any time, as needed. In addition, use in combination with an adhesive is also preferable.

The membrane-shaped biopolymer adsorbing material of the present invention is sufficient if the adsorbing portion and the supporting portion adhere to each other when the operator actually uses the absorbing material. Because of this, in addition to the case of providing the membrane-shaped biopolymer adsorbing material of the present invention wherein the adsorbing portion and the supporting portion have adhered to each other by use of an adhesive, etc., a biopolymer adsorbing kit can be provided which separately includes an adsorbing membrane corresponding to the adsorbing portion and a supporting membrane corresponding to the supporting portion. For instance, if the operator superposes the supporting membrane and the adsorbing membrane by an adhesive, or by intermolecular force or static electricity, the membrane-shaped biopolymer adsorbing material of the present invention can be constructed.

The preferred adsorbing membranes for the above-mentioned kit are a nitrocellulose membrane, a nylon membrane, a positive charge introduced nylon membrane, a DEAE-cellulose membrane, a polyvinylidenefluoride (PVDF) membrane, etc. A nitrocellulose or nylon membrane with fine bores whose average pore diameter is between 0.2 µm and 2.0 µm is particularly preferred.

On the other hand, the preferred supporting membranes for the above-mentioned kit are a cellulose membrane, a cellulose acetate membrane, a regenerated cellulose membrane, a polyethylene membrane, a polypropylene membrane, a polyvinyl chloride (PVC) membrane, a polytetrafluoroethylene (PTFE) membrane, a polycarbonate (PC) membrane, a polyethylene terephthalate (PET) membrane, etc. A porous structure membrane with fine bores whose average pore diameter is between 0.2 µm and 2.0 µm, preferably between 0.4 µm and 1.0 µm, for example, a porous PC or polyester membrane is particularly preferable.

A description will hereinafter be made of an embodiment of the present invention wherein the adsorbing material 1 with a double-layer structure such as the one shown in Fig. 1 is adopted as the membrane-shaped biopolymer adsorbing material of the present invention.

In this embodiment, the membrane-shaped biopolymer adsorbing material 1 (with a thickness of about 20 µm and a size of 14cm × 9cm) is constructed of an adsorbing portion 3 consisting of a porous nitrocellulose membrane (with a thickness of about 10 µm) whose average bore diameter is approximately 0.2 to 0.4 µm, and a supporting portion 2 consisting of a porous PC membrane (with a thickness of about 10 µm) whose average bore diameter is approximately 0,2 to 1.0 µm. This membrane-shaped biopolymer adsorbing material 1 is used in a general Southern blotting method. That is, as shown in Fig. 2, a sample containing a predetermined DNA fragment (having 50 to 100 kilobase pairs (kbp)) is submarine-electrophoresed by employing 0.5-% agarose gel 13 of the same size as the membrane-shaped biopolymer adsorbing material 1 prepared, whereby the DNA fragment in the agarose gel 13 is developed according to the strand length. On the other hand, as shown in Fig. 2, slightly thick filter paper 12 is placed on a bed 11 disposed in a shallow tank 10. The edge portions of the filter paper 12 are immersed in a blotting solution S (in this embodiment, 10 × SSC) in the tank 10.

The electrophoresed agarose gel 13 is alkali-denatured and is then placed on the filter paper 12. Next, the membrane-shaped biopolymer adsorbing material 1 is placed on the gel 13 so that the adsorbing portion 3 makes contact with the gel 13. A paper towel 14 with a good water absorbing property and a heavy stone 15 are superposed on the supporting portion 2 of the membrane-shaped biopolymer adsorbing material 1, as shown in Fig. 2. In this state, the tank 10 is left as it is for a whole day and night to perform submarine blotting. Thereafter, the membrane-shaped biopolymer adsorbing material 1 is collected and hybridization is performed with a probe obtained by labeling single-stranded DNA complementary to one strand of the aforementioned double-stranded DNA fragment by ³²P. Subsequently, autoradiography is performed. As a result, it has been confirmed that the DNA fragment is transferred and fixed from the gel 13 at the same level as the conventional nitrocellulose membrane.

Thus, the membrane-shaped biopolymer adsorbing material is provided which has the same biopolymer adsorbing power as the conventional biopolymer adsorbing membrane and is also less liable to be damaged and produce creases or wrinkles.

Also the membrane-shaped biopolymer adsorbing material, and the kit for constructing the adsorbing material, do not require greater care and attention, required in handling the conventional mere nitrocellulose membrane. Because of this, the operator is released from strain or stress during hybridization or autoradiography operation. As operability is enhanced, it becomes possible to efficiently and smoothly perform hybridization, autoradiography, etc.

In addition, all of the contents of Japanese Patent Application No. 11(1999)-262922 are incorporated into this specification by reference.

## Claims

1. A membrane-shaped biopolymer adsorbing material comprising:
an adsorbing portion for adsorbing a biopolymer contacted; and
a supporting portion, which has higher rigidity than said adsorbing portion, for supporting said adsorbing portion.

2. The membrane-shaped biopolymer adsorbing material as set forth in claim 1, wherein said adsorbing portion and said supporting portion constitute double-layer structure.

3. The membrane-shaped biopolymer adsorbing material as set forth in claim 1, wherein said adsorbing portion and said supporting portion are each constructed of a porous body having water permeability.

4. The membrane-shaped biopolymer adsorbing material as set forth in claim 2, wherein said adsorbing portion and said supporting portion are each constructed of a porous body having water permeability.

5. A biopolymer adsorbing kit comprising:
an adsorbing membrane for adsorbing a biopolymer contacted; and
a supporting membrane, which is superposed on said adsorbing membrane and has higher rigidity than said adsorbing membrane, for supporting said adsorbing membrane.

6. The biopolymer adsorbing kit as set forth in claim 5, wherein said adsorbing membrane and said supporting membrane are each constructed of a porous body having water permeability.
